# EUROPEAN PATENT APPLICATION

(11) **EP 3 340 061 A1**
(43) Date of publication of application: **27.06.2018**
(21) Application number: 17208118.4
(22) Date of filing: 18.12.2017
(51) Int. Cl.: G06F 12/123, G06F 12/127

(54) **INCREASING LIFETIME RELIABILITY FOR A CACHE MEMORY**

(30) Priority: 20.12.2016 US 201615385604
(71) Applicant: INTEL Corporation, Santa Clara, CA 95054 (US)
(72) Inventor: REED, Elizabeth, Washougal, WA Washington 98671 (US); ALAMELDEEN, Alaa R., Hillsboro, OR Oregon 97124 (US); NAEIMI, Helia, Santa Clara, CA California 97124 (US); STOLT, Patrick F., Beavverton, OR Oregon 97006 (US)
(74) Representative: Samson & Partner Patentanwälte mbB

(57) **Abstract**

A first request to evict a first cache line that is stored in a cache memory may be received. The first cache line may be evicted based on a replacement policy. A second request to evict a second cache line from the cache memory may be received. Following the receipt of the second request, it is determined whether a condition associated with the replacement policy has been satisfied. If the condition associated with replacement policy has been satisfied, then the second cache line may be evicted based on a random replacement policy.

## Description

### Technical Field

Embodiments described herein generally relate to cache memory and, more specifically, selecting a policy to evict cache lines of a cache memory.

### Background

A processing device may be based on an architecture that includes a cache memory. A processor core of the processing device may store data in the cache memory. For example, instructions may access data stored in a data cache memory. The data cache memory may be used to more efficiently execute instructions associated with the processor core as opposed to executing instructions from a main memory.

### Brief Description of the Drawings

**FIG. 1** is a block diagram illustrating a computing system that implements a cache eviction circuit to evict cache lines according to a replacement policy in accordance with some embodiments.
**FIG. 2** is a flow diagram of a method of determining a cache replacement policy to be used for a cache eviction.
**FIG. 3A** illustrates an example of evicting cache lines according to a replacement policy.
**FIG. 3B** illustrates an example of evicting cache lines according to a random replacement policy.
**FIG. 4** is a flow diagram of a method of determining a cache line is protected from eviction.
**FIG. 5** is a flow diagram of a method of determining a cache replacement policy to be used for a cache eviction.
**FIG. 6** illustrates a block diagram of the micro-architecture for a processor that includes logic in accordance with one embodiment of the disclosure.
**FIG. 7** is a block diagram illustrating a system in which an embodiment of the disclosure may be used.
**FIG. 8** is a block diagram of a system in which an embodiment of the disclosure may operate.
**FIG. 9** is a block diagram of a system in which an embodiment of the disclosure may operate.
**FIG. 10** is a block diagram of a System-on-a-Chip (SOC) in accordance with an embodiment of the present disclosure
**FIG. 11** is a block diagram of an embodiment of an SOC design in accordance with the present disclosure.
**FIG. 12** illustrates a block diagram of one embodiment of a computer system.

### Description of Embodiments

Aspects of the present disclosure are directed to a cache line replacement policy in a processing architecture. Cache memory is a fast memory that stores the most recently used main memory data. Cache memory allows for quicker access to main memory data and, in multiprocessor systems, cache memory reduces system bus and main memory traffic. The cache memory temporarily stores the most recently used data read from the main memory. If a processor requires data from the main memory, a cache controller checks to see if the required data is stored in the cache memory. In the case of the cache controller finding matching data stored in the cache (i.e., a cache hit), the data is supplied to the processor directly from the cache. In the case of the cache controller not finding matching data (i.e., a cache miss), the data is read from the main memory. Instructions and data are transferred from the main memory to the cache in fixed blocks which are referred to as cache lines.

When the cache memory is full, data may be discarded from the cache to make room for new data from the main memory. The process of discarding data from the cache to make room for the new data is known as cache eviction. Cache replacement policies are processes that determine which cache lines are to be evicted in order to make room for the new data. An example of a cache replacement policy is a least recently used (LRU) policy. An LRU policy tracks how recently cache lines in the cache are used (e.g., how much time has elapsed since the cache line was associated with a cache hit) and proceeds to evict the least recently used cache line. The LRU policy tracks how recently cache lines are used by keeping age-bits for each cache line that indicate the last time the cache line was used. The LRU policy may evict the least recently used cache line based on the age bits. Once the cache line has been evicted it is available to have new data written to it.

Using such replacement policies may result in particular cache lines containing data that is less frequently used being evicted and have new data written to them more often than other cache lines. Cache memory, especially if designed with non-volatile memory cells, may be written to a certain number of times before failure of the cache line occurs and the processing device or non-volatile memory must be replaced. When a particular cache line is written to more often than others, failure of the cache line, and in turn the processing device, is likely to occur earlier than if all the cache lines in the cache memory were written to an equal number of times. Thus, the reliability and lifespan of the processing device (or a non-volatile memory) can be increased by implementing a replacement policy that ensures all cache lines are evicted and written to an equal or approximately equal number of times. However, while such a replacement policy increases the reliability of the processing device, replacing cache lines of data that are frequently read by the processing device increases the number of cache misses, decreasing the performance of the processing device.

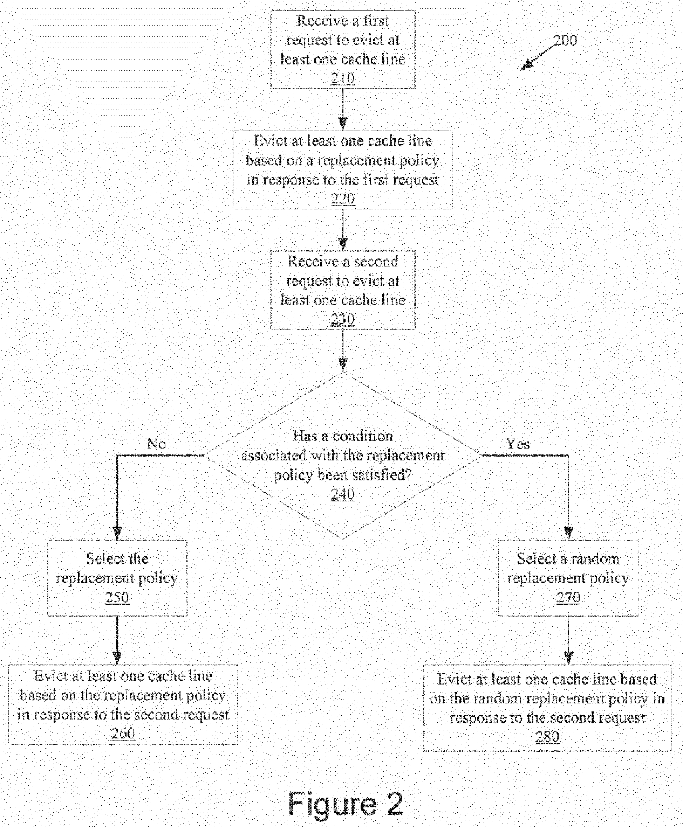

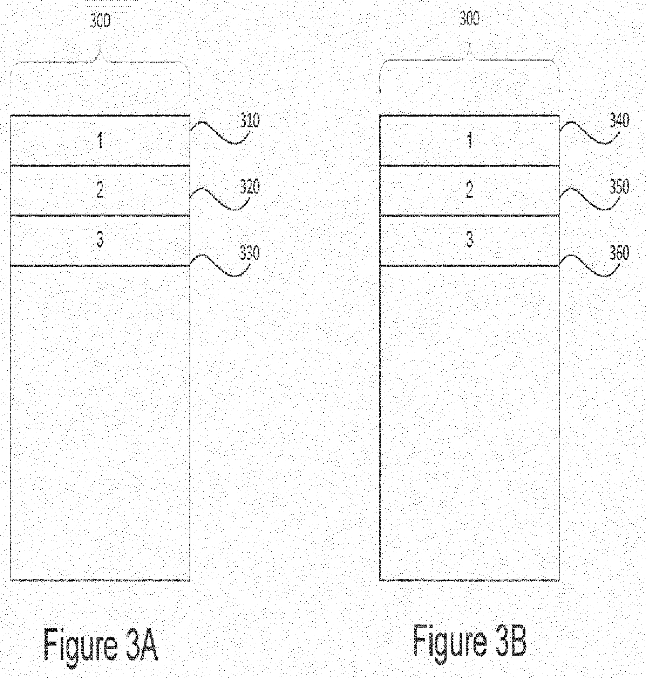

Embodiments of the present disclosure receive a request to evict cache lines from the cache memory and evict at least one cache line of the cache according to a replacement policy, such as the LRU replacement policy described above. Upon receiving a second request to evict cache lines from the cache memory, the processing device determines whether a condition associated with the replacement policy has been satisfied. Conditions associated with the replacement policy are discussed in more detail in conjunction with **Fig. 2** below. If the processor determines that the condition associated with the replacement policy has been satisfied, then the cache is evicted according to a random replacement policy. The random replacement policy is discussed in more detail in conjunction with **Fig. 3B** below. Once a condition associated with the random replacement policy has occurred, cache lines are once again evicted according to the replacement policy.

Such a process may improve the reliability of the processing device without having a significant impact on its performance. For example, the first series of cache evictions may be performed according to an LRU replacement policy, preventing cache lines containing data frequently accessed by the processor from being evicted, thereby reducing the number of cache misses and increasing performance of the processing device. Once a condition associated with the LRU replacement policy has occurred, the second series of cache evictions may be performed according to a random replacement policy. The random replacement policy allows for the eviction and writing of data to the cache lines containing frequently accessed data that would not be evicted under the LRU replacement policy, preventing a disproportionate number of eviction and write operations being performed on any of the cache lines of the cache memory. The result is an increase in the lifespan and reliability of the processing device with a minimal impact on performance

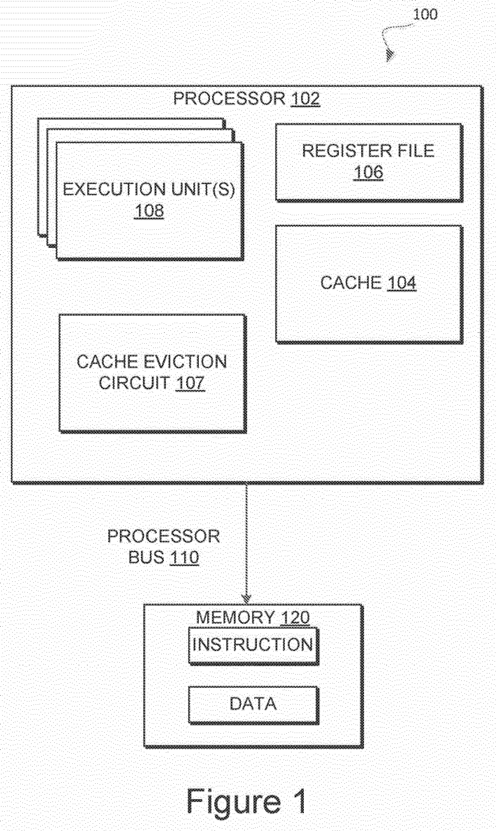

**Fig. 1** is a block diagram illustrating a computing system 100 that implements a cache eviction circuit 107 for determining when a condition associated with a replacement policy has occurred and identify which replacement policy to use in accordance with some embodiments. The computing system 100 is formed with a processor 102 that includes one or more execution units 108 to execute a cache eviction instruction in accordance with one or more embodiments as described herein. In short, the cache eviction circuit 107 is used by the processor 102 to determine which cache lines of the cache memory 104 to evict according to a replacement policy. In one embodiment the cache memory may be a non-volatile memory, such as Spin Transfer-Torque Magnetic Random Access Memory (STT-MRAM). Data received from the main memory 120 is then written to the evicted cache lines. The cache eviction circuit 107 may then determine that a condition associated with the replacement policy has occurred. Following the determination, the cache eviction circuit 107 is used by the processor 102 to determine which cache lines of the cache memory 104 to evict according to a random replacement policy. In some embodiments, the cache eviction circuit 107 may include an approximate counter to track the approximate number of write operations performed on each of the cache lines. When a write operation is performed on a cache line, the counter may be incremented according to the Morris Algorithm for approximate counting. Using the Morris Algorithm, when the current value of the counter is *n,* where *n* is the number of write operations performed on a cache line, the counter may be incremented with probability 1/(2*ⁿ*). When the cache line is evicted, the counter may reset to 0. In another embodiment, the cache eviction circuit 107 may include an accurate counter to track the number of write operations performed on each of the cache lines. Additional details with regard to a cache eviction circuit 107 are described in more detail below with respect to **Figs. 2-5****.**

Computing system 100 includes a component, such as a processor 102, to employ execution units 108 including logic to perform processes for processing data in accordance with the embodiments described herein. In one embodiment, sample computing system 100 executes an operating system. Embodiments of the present disclosure are not limited to any specific combination of hardware circuitry and software.

Embodiments are not limited to computer systems. Alternative embodiments of the present disclosure can be used in other devices such as handheld devices and embedded applications. Examples of handheld devices include, but are not limited to, cellular phones, Internet Protocol devices, digital cameras, personal digital assistants (PDAs), and handheld PCs. Embedded applications may include, but are not limited to, a micro controller, a digital signal processor (DSP), system on a chip (SOC), network computers (NetPC), set-top boxes, network hubs, wide area network (WAN) switches, or any other system that can perform one or more instructions in accordance with at least one embodiment.

In the illustrated embodiment of **Fig. 1****,** processor 102 includes one or more execution units 108 to implement a process that is to perform at least one instruction. One embodiment may be described in the context of a single processor desktop or server system, but alternative embodiments may be included in a multiprocessor system. System 100 may be an example of a 'hub' system architecture. The computer system 100 includes a processor 102 to process data signals. The processor 102, as one illustrative example, includes a complex instruction set computer (CISC) microprocessor, a reduced instruction set computing (RISC) microprocessor, a very long instruction word (VLIW) microprocessor, a processor implementing a combination of instruction sets, an out of order based processor, or any other processor device, such as a digital signal processor, for example. The processor 102 is coupled to a processor bus 110 that transmits data signals between the processor 102 and other components in the system 100, such as main memory 120 storing instruction, data, or any combination thereof. The other components of the system 100 may include, but are not limited to, a graphics accelerator, a memory controller hub, an I/O controller hub, a wireless transceiver, a Flash BIOS, a network controller, an audio controller, a serial expansion port, and an I/O controller.

In one embodiment, the processor 102 includes a Level 1 (L1) internal cache memory 104. Depending on the architecture, the processor 102 may have a single internal cache memory or multiple levels of internal cache memories (e.g., L1 and L2). For example, the processor 102 may include an instruction cache (e.g., an L1 instruction cache) and a data cache (e.g. an L1 data cache) as part of its L1 internal cache memory. Other embodiments include a combination of both internal and external caches depending on the particular implementation and needs. Register file 106 is to store different types of data in various registers including, but not limited to, integer registers, floating point registers, vector registers, banked registers, shadow registers, checkpoint registers, status registers, configuration registers, and instruction pointer registers.

Execution unit 108, including logic to perform integer and floating point operations, also resides in the processor 102. It should be noted that the execution unit may or may not have a floating point unit. The processor 102, in one embodiment, includes a microcode (µcode) ROM to store microcode, which when executed, is to perform processes for certain macroinstructions or handle complex scenarios. Here, microcode is potentially updateable to handle logic bugs/fixes for processor 102. Alternative embodiments of an execution unit 108 may also be used in micro controllers, embedded processors, graphics devices, DSPs, and other types of logic circuits.

System 100 includes a main memory 120. Main memory 120 may include, but is not limited to, a dynamic random access memory (DRAM) device, a static random access memory (SRAM) device, flash memory device, or other memory device. Main memory 120 stores instructions and/or data represented by data signals that are to be executed by the processor 102. The processor 102 is coupled to the main memory 120 via a processor bus 110. A system logic chip, such as a memory controller hub (MCH) may be coupled to the processor bus 110 and main memory 120. An MCH can provide a high bandwidth memory path to memory 120 for instruction and data storage and for storage of graphics commands, data and textures. The MCH can be used to direct data signals between the processor 102, main memory 120, and other components in the system 100 and to bridge the data signals between processor bus 110, main memory 120, cache memory 104, and system I/O, for example. The MCH may be coupled to main memory 120 through a memory interface. In some embodiments, the system logic chip can provide a graphics port for coupling to a graphics controller through an Accelerated Graphics Port (AGP) interconnect. The system 100 may also include an I/O controller hub (ICH). The ICH can provide direct connections to some I/O devices via a local I/O bus. The local I/O bus is a high-speed I/O bus for connecting peripherals to the main memory 120, chipset, and processor 102. Some examples are the audio controller, firmware hub (flash BIOS), wireless transceiver, data storage, legacy I/O controller containing user input and keyboard interfaces, a serial expansion port such as Universal Serial Bus (USB), and a network controller. The data storage device can comprise a hard disk drive, a floppy disk drive, a CD-ROM device, a flash memory device, or other mass storage device.

For another embodiment of a system, the cache eviction circuit 107 may be used with a system on a chip. The memory for one such system may be a flash memory. The flash memory may be located on the same die as the processor and other system components. Additionally, other logic blocks, such as a memory controller or graphics controller, may also be located on a system on a chip.

**Fig. 2** is a flow diagram of a method 200 of determining a cache replacement policy to be used for a cache eviction. The method 200 may be performed by the cache eviction circuit 107. For example, the method 200 may be used by the cache eviction circuit 107 of **Fig. 1** to receive a request to evict data from a cache line from a processor (e.g., processor 102) and determine if a cache line is to be evicted according to a baseline replacement policy (e.g., LRU) or a random replacement policy. The method 200 may also be performed by a processing circuit that may include hardware (e.g., circuitry, dedicated logic, programmable logic, microcode, etc.), software, firmware, or a combination thereof. Alternatively, other components of the computing system 100 may perform some or all of the operations of the method 200.

As shown in **Fig. 2****,** the method 200 may begin with the processing circuit receiving, at block 210, a first request to evict at least one cache line. The first request may be received in response to an indication to write data from a main memory to a cache memory. Upon receipt of the request, the processing circuit may evict at least one cache line based on a replacement policy (block 220). For example, the processing circuit may evict cache lines according to an LRU replacement policy. Additional details with regard to the replacement policy are described in more detail below with respect to **Fig. 3A****.** After evicting the cache lines based on a replacement policy, at block 230, the processing circuit may receive a second request to evict at least one cache line. For example, the second request may be received in response to another indication to write data from the main memory to the cache memory. At block 240, the processing circuit may determine if a condition associated with the replacement policy has been satisfied. For example, if the number of cache evictions performed using the replacement policy exceeds a threshold number of cache evictions, then the condition associated with the replacement policy may be satisfied. Other examples of conditions associated with the replacement policy include, but are not limited to, a period of time, percentage of cache evictions, cache evictions of a cache line exceeding a threshold, and the like. For example, if the condition associated with the replacement policy is a period of 30 seconds, then once 30 seconds has elapsed the condition associated with the replacement policy may be satisfied. In another example, if the condition associated with the replacement policy is a period of 5 seconds, the once 5 seconds has elapsed the condition associated with the replacement policy may be satisfied. Thus, if a period of time that has elapsed exceeds a threshold period of time, then the condition may be considered to be satisfied. In another example, if the condition associated with the replacement policy is 95% of cache evictions are to be performed according to the replacement policy, then the condition may be satisfied. In another example, over an interval of 1 billion cache evictions, a random replacement policy may be applied at the end of this interval duration for 5-10% of the total interval. Thus, if a number of cache lines that have been evicted exceed a threshold number of cache lines of the cache memory, then the condition may be considered to be satisfied. In a final example, if the condition associated with the replacement policy is 1,000,000 cache evictions of a cache line, then when a cache line has been evicted more than 1,000,000 times the condition may be satisfied. Thus, if a number of times that a cache line has been evicted exceeds a threshold number of times, then the condition may be considered to be satisfied.

Referring to **Fig. 2****,** at block 250, if the condition associated with the replacement policy has not been satisfied then the processing circuit may select the replacement policy described at block 220 in response to the second cache eviction request. At block 260, the processing circuit may evict the cache lines according to the replacement policy. For example, if the condition associated with an LRU replacement policy is a period of time totaling 30 seconds and only 20 seconds has elapsed, then the second cache eviction may be performed according to the LRU replacement policy. Otherwise, if the condition associated with the replacement policy has been satisfied then the processing circuit may select a random replacement policy (block 270). At block 280, the processing circuit may evict at least one cache line based on the random replacement policy in response to the second request. For example, if the condition associated with an LRU replacement policy is a period of time totaling 30 seconds and 35 seconds has elapsed, then the second cache eviction may be performed according to the random replacement policy. Additional details with regard to the random replacement policy are described in more detail below with respect to **Fig. 3B****.**

Thus, at a first time, a first replacement policy may be used to evict data from cache lines of a cache memory. After a condition associated with the first replacement policy has been satisfied, a second replacement policy (e.g., the random replacement policy) may be selected at a second time to evict data from cache lines of the cache memory.

**Fig. 3A** illustrates an example of evicting cache lines according to a replacement policy. In general, the cache lines of **Figs. 3A** and **3B** may correspond to cache lines as described in relation to the cache eviction circuit 107 of **Fig. 1****.**

As shown in **Fig. 3A****,** cache memory 300 may include cache lines 310, 320 and 330. In general, the cache memory of **Figs. 3A** and **3B** may correspond to the cache memory 104 of **Fig. 1****.** Upon receiving a request to evict a cache line, the processing circuit may perform a cache line eviction according to a replacement policy. Using the previous example of an LRU replacement policy, the processing circuit may determine which cache line of the cache lines 310, 320 and 330 has been least recently used and evict that cache line. For example, if cache line 310 contains data that was least recently used, the processing circuit may evict cache line 310. Then, for a second eviction request if cache line 320 now contains data that was least recently used, the processing circuit may evict cache line 320. For a third eviction request if cache line 330 now contains data that was least recently used, the processing circuit may evict cache line 330. Although embodiments of the present disclosure may be described using an LRU replacement policy, it should be noted that embodiments of the present disclosure may also be utilized using any replacement policy. Examples of replacement policies include, but are not limited to, first in first out (FIFO), last in first out (LIFO), most recently used (MRU), pseudo-LRU (PLRU), segmented LRU (SLRU), least-frequently used (LFU) and the like.

As shown in **Fig. 3B****,** cache memory 300 may include cache lines 340, 350 and 360. Upon receiving a request to evict a cache line, the processing circuit will perform a cache eviction according to a random replacement policy. The processing circuit may select a cache line at random from cache lines 340, 350 and 360 and evict that cache line. For example, for a first cache eviction request the processing circuit may randomly select and evict cache line 360. Then, for a second cache eviction request the processing circuit may randomly select and evict cache line 340. For a third cache eviction request the processing circuit may select and evict cache line 350. In one embodiment, the processing circuit may use an arbitrary set of bits to randomly select a cache line for eviction. In another embodiment, the processing circuit may include an accurate random number generator to randomly select a cache line for eviction.

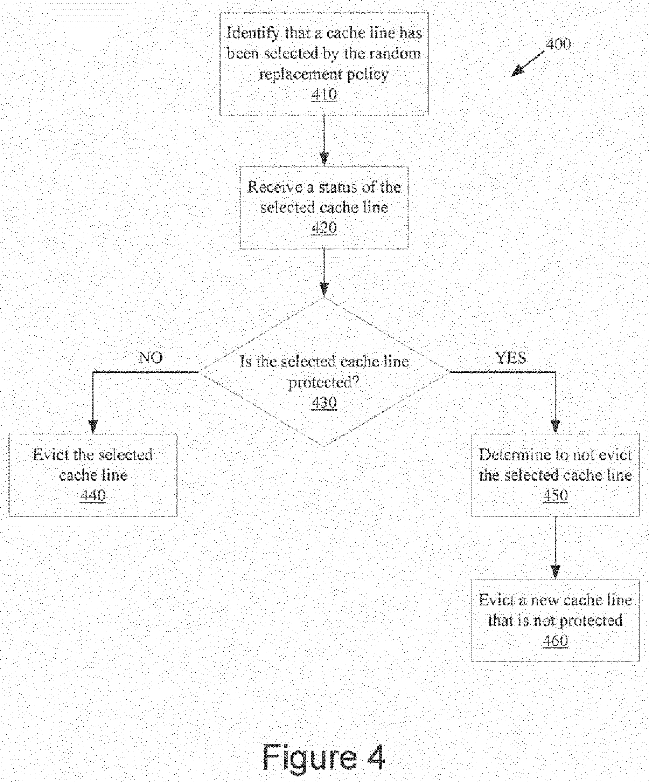

**Fig. 4** is a flow diagram of a method 400 of determining a cache line is protected from eviction. The method 400 may be performed by the cache eviction circuit 107. For example, the method 400 may be used by the cache eviction circuit 107 of **Fig. 1** to receive a request to evict a cache line from a processor (e.g., processor 102), identify a cache line has been selected by the replacement policy to be evicted, and determine that the selected cache line is protected. The method 400 may also be performed by a processing circuit that may include hardware (e.g., circuitry, dedicated logic, programmable logic, microcode, etc.), software, firmware, or a combination thereof. Alternatively, other components of the computing system 100 may perform some or all of the operations of the method 400.

As shown in **Fig. 4****,** the method 400 may begin with the processing circuit identifying that a cache line has been selected by the random replacement policy (block 410). At block 420, the processing circuit may receive a status of the cache line that has been selected. In some embodiments, the status of the cache line may be indicated in a status bit or flag. At block 430, the processing circuit may determine if the selected cache line has a protected status and may not be evicted. For example, if a cache line contains data that is frequently used it may be desirable to protect the cache line from eviction in order to prevent unnecessary write operations to that cache line. In some embodiments, the protected status may be designated by a user. In other embodiments, the protected status may be designated by the processing device. If the processing circuit determines that the selected cache line is not protected, then the cache line is evicted (block 440). For example, referring back to **Fig. 3A****,** upon selection of cache line 350 for eviction the processing circuit receives a status of cache line 350. The status of cache line 350 indicates whether cache line 350 is protected from eviction. If cache line 350 is not protected, then the processing circuit may evict cache line 350. Otherwise, if the selected cache line is protected, then the processing circuit determines to not evict the selected cache line (block 450). The processing circuit then evicts a new cache line that is not protected (block 460). Using the above example, if cache line 350 is protected, then the processing circuit will determine to not evict cache line 350. The processing circuit may then evict cache line 340 if cache line 340 does not have a protected status.

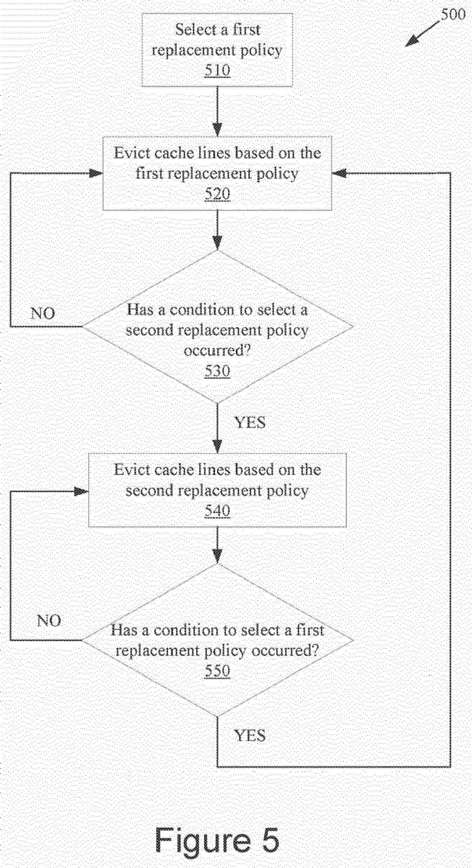

**Fig. 5** is a flow diagram of a method 500 of determining a cache replacement policy to be used for a cache eviction. The method 500 may be performed by the cache eviction circuit 107. For example, the method 500 may be used by the cache eviction circuit 107 of **Fig. 1** to receive a request to evict a cache line from a processor (e.g., processor 102) and determine a condition to select a replacement policy. The method 500 may also be performed by a processing circuit that may include hardware (e.g., circuitry, dedicated logic, programmable logic, microcode, etc.), software, firmware, or a combination thereof. Alternatively, other components of the computing system 100 may perform some or all of the operations of the method 500.

As shown in **Fig. 5****,** the method 500 may begin with the processing circuit selecting a first replacement policy, such as those discussed in **Figs. 3A** and **3B** (block 510). For example, the processing circuit may select an LRU replacement policy. The processing circuit may evict cache lines based on the first replacement policy (block 520). The processing circuit may determine that a condition to select a second replacement policy has occurred, such as the conditions discussed in **Fig. 2** (block 530). The processing circuit may then select the second replacement policy. For example, if the condition is a period of time lasting 30 seconds and more than 30 seconds has elapsed, then the processing circuit may select a random replacement policy as described in **Fig. 3B****.** The processing circuit may further evict cache lines based on the second replacement policy (block 540). The processing circuit may then determine that a condition to select the first replacement policy has occurred (block 550). For example, if the condition is a number of cache evictions of a cache line exceeding 1,000,000 cache line evictions and the number of cache evictions of the cache line exceeds 1,000,000 cycles, then the processing circuit may select the LRU replacement policy used at block 510.

As such, a first replacement policy may be used to evict cache lines. After a condition has been satisfied with respect to the first replacement policy, a second replacement policy may be used to evict cache lines. Subsequently, after another condition has been satisfied with respect to the second replacement policy, the eviction of cache lines may be based on the previous first replacement policy.

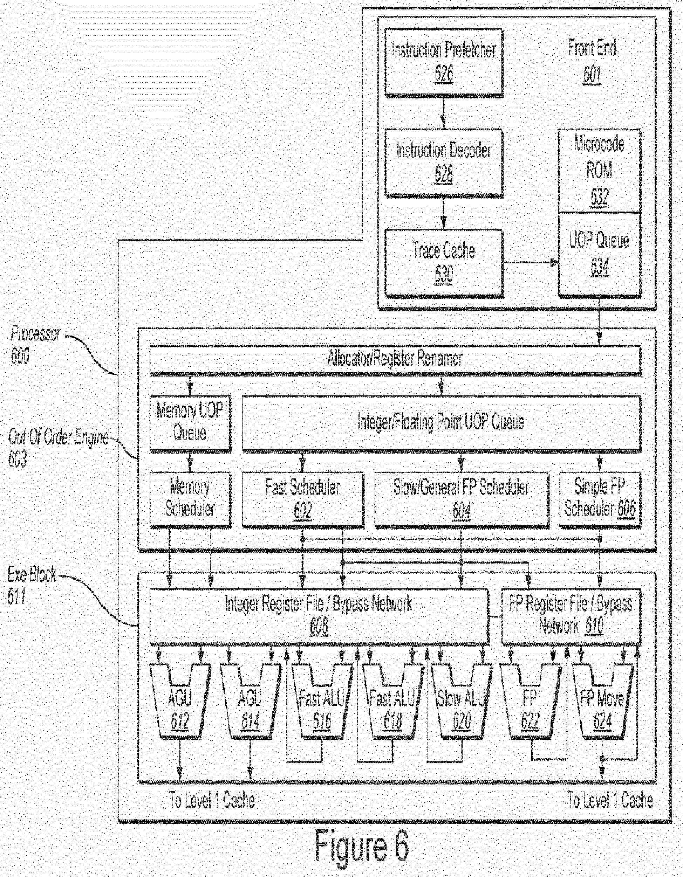

**Figure 6** illustrates a block diagram of the micro-architecture for a processor 600 that includes hybrid cores in accordance with one embodiment of the disclosure. In some embodiments, an instruction in accordance with one embodiment can be implemented to operate on data elements having sizes of byte, word, doubleword, quadword, etc., as well as datatypes, such as single and double precision integer and floating point datatypes. In one embodiment the in-order front end 601 is the part of the processor 600 that fetches instructions to be executed and prepares them to be used later in the processor pipeline.

The front end 601 may include several units. In one embodiment, the instruction prefetcher 626 fetches instructions from memory and feeds them to an instruction decoder 628 which in turn decodes or interprets them. For example, in one embodiment, the decoder decodes a received instruction into one or more operations called "micro-instructions" or "micro-operations" (also called micro op or uops) that the machine can execute. In other embodiments, the decoder parses the instruction into an opcode and corresponding data and control fields that are used by the micro-architecture to perform operations in accordance with one embodiment. In one embodiment, the trace cache 630 takes decoded uops and assembles them into program ordered sequences or traces in the uop queue 634 for execution. When the trace cache 630 encounters a complex instruction, the microcode ROM 632 provides the uops needed to complete the operation.

Some instructions are converted into a single micro-op, whereas others need several micro-ops to complete the full operation. In one embodiment, if more than four micro-ops are needed to complete an instruction, the decoder 628 accesses the microcode ROM 632 to do the instruction. For one embodiment, an instruction can be decoded into a small number of micro ops for processing at the instruction decoder 628. In another embodiment, an instruction can be stored within the microcode ROM 632 should a number of micro-ops be needed to accomplish the operation. The trace cache 630 refers to an entry point programmable logic array (PLA) to determine a correct micro-instruction pointer for reading the micro-code sequences to complete one or more instructions in accordance with one embodiment from the micro-code ROM 632. After the microcode ROM 632 finishes sequencing micro-ops for an instruction, the front end 601 of the machine resumes fetching micro-ops from the trace cache 630.

The out-of-order execution engine 603 is where the instructions are prepared for execution. The out-of-order execution logic has a number of buffers to smooth out and reorder the flow of instructions to optimize performance as they go down the pipeline and get scheduled for execution. The allocator logic allocates the machine buffers and resources that each uop needs in order to execute. The register renaming logic renames logic registers onto entries in a register file. The allocator also allocates an entry for each uop in one of the two uop queues, one for memory operations and one for non-memory operations, in front of the instruction schedulers: memory scheduler, fast scheduler 602, slow/general floating point scheduler 604, and simple floating point scheduler 606. The uop schedulers 602, 604, 606, determine when a uop is ready to execute based on the readiness of their dependent input register operand sources and the availability of the execution resources the uops need to complete their operation. The fast scheduler 602 of one embodiment can schedule on each half of the main clock cycle while the other schedulers can only schedule once per main processor clock cycle. The schedulers arbitrate for the dispatch ports to schedule uops for execution.

Register files 608, 610, sit between the schedulers 602, 604, 606, and the execution units 612, 614, 616, 618, 620, 622, 624 in the execution block 611. There is a separate register file 608, 610, for integer and floating point operations, respectively. Each register file 608, 610, of one embodiment also includes a bypass network that can bypass or forward just completed results that have not yet been written into the register file to new dependent uops. The integer register file 608 and the floating point register file 610 are also capable of communicating data with the other. For one embodiment, the integer register file 608 is split into two separate register files, one register file for the low order 32 bits of data and a second register file for the high order 32 bits of data. The floating point register file 610 of one embodiment has 128 bit wide entries because floating point instructions typically have operands from 64 to 128 bits in width.

The execution block 611 contains the execution units 612, 614, 616, 618, 620, 622, 624, where the instructions are actually executed. This section includes the register files 608, 610, that store the integer and floating point data operand values that the micro-instructions need to execute. The processor 600 of one embodiment is comprised of a number of execution units: address generation unit (AGU) 612, AGU 614, fast ALU 616, fast ALU 618, slow ALU 620, floating point ALU 622, floating point move unit 624. For one embodiment, the floating point execution blocks 622, 624, execute floating point, MMX, SIMD, and SSE, or other operations. The floating point ALU 622 of one embodiment includes a 64 bit by 64 bit floating point divider to execute divide, square root, and remainder micro-ops. For embodiments of the present disclosure, instructions involving a floating point value may be handled with the floating point hardware.

In one embodiment, the ALU operations go to the high-speed ALU execution units 616, 618. The fast ALUs 616, 618, of one embodiment can execute fast operations with an effective latency of half a clock cycle. For one embodiment, most complex integer operations go to the slow ALU 620 as the slow ALU 620 includes integer execution hardware for long latency type of operations, such as a multiplier, shifts, flag logic, and branch processing. Memory load/store operations are executed by the AGUs 612, 614. For one embodiment, the integer ALUs 616, 618, 620, are described in the context of performing integer operations on 64 bit data operands. In alternative embodiments, the ALUs 616, 618, 620, can be implemented to support a variety of data bits including 16, 32, 128, 256, etc. Similarly, the floating point units 622, 624, can be implemented to support a range of operands having bits of various widths. For one embodiment, the floating point units 622, 624, can operate on 128 bits wide packed data operands in conjunction with SIMD and multimedia instructions.

In one embodiment, the uops schedulers 602, 604, 606, dispatch dependent operations before the parent load has finished executing. As uops are speculatively scheduled and executed in processor 600, the processor 600 also includes logic to handle memory misses. If a data load misses in the data cache, there can be dependent operations in flight in the pipeline that have left the scheduler with temporarily incorrect data. A replay mechanism tracks and re-executes instructions that use incorrect data. Only the dependent operations need to be replayed and the independent ones are allowed to complete. The schedulers and replay mechanism of one embodiment of a processor are also designed to catch instruction sequences for text string comparison operations.

The processor 600 also includes logic to implement store address prediction for memory disambiguation according to embodiments of the disclosure. In one embodiment, the execution block 611 of processor 600 may include a store address predictor (not shown) for implementing store address prediction for memory disambiguation.

The term "registers" may refer to the on-board processor storage locations that are used as part of instructions to identify operands. In other words, registers may be those that are usable from the outside of the processor (from a programmer's perspective). However, the registers of an embodiment should not be limited in meaning to a particular type of circuit. Rather, a register of an embodiment is capable of storing and providing data, and performing the functions described herein. The registers described herein can be implemented by circuitry within a processor using any number of different techniques, such as dedicated physical registers, dynamically allocated physical registers using register renaming, combinations of dedicated and dynamically allocated physical registers, etc. In one embodiment, integer registers store thirty-two bit integer data. A register file of one embodiment also contains eight multimedia SIMD registers for packed data.

For the discussions below, the registers are understood to be data registers designed to hold packed data, such as 64 bits wide MMXTM registers (also referred to as 'mm' registers in some instances) in microprocessors enabled with MMX technology from Intel Corporation of Santa Clara, California. These MMX registers, available in both integer and floating point forms, can operate with packed data elements that accompany SIMD and SSE instructions. Similarly, 128 bits wide XMM registers relating to SSE2, SSE3, SSE4, or beyond (referred to generically as "SSEx") technology can also be used to hold such packed data operands. In one embodiment, in storing packed data and integer data, the registers do not need to differentiate between the two data types. In one embodiment, integer and floating point are either contained in the same register file or different register files. Furthermore, in one embodiment, floating point and integer data may be stored in different registers or the same registers.

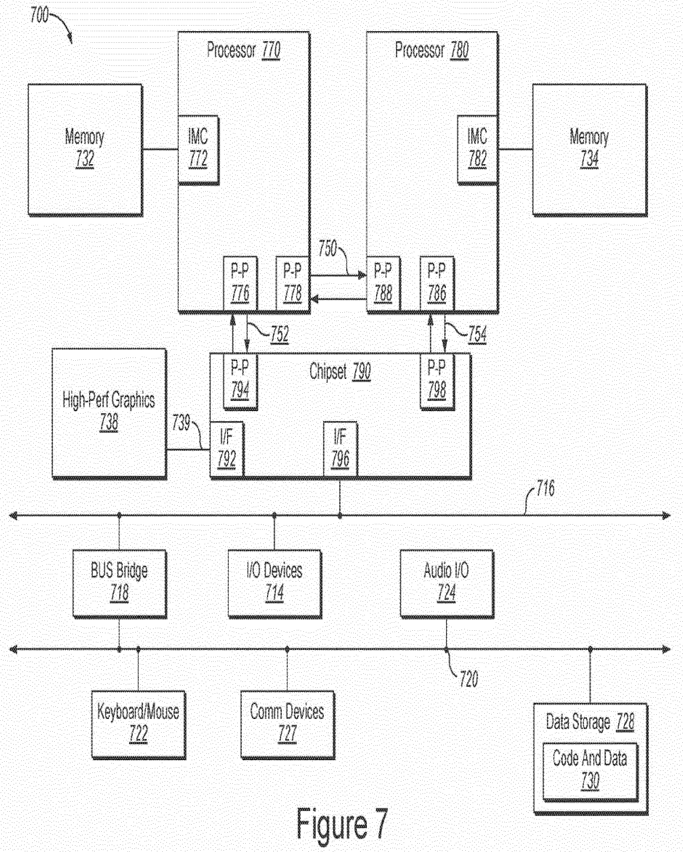

Referring now to **Figure 7****,** shown is a block diagram illustrating a system 700 in which an embodiment of the disclosure may be used. As shown in **Figure 7****,** multiprocessor system 700 is a point-to-point interconnect system, and includes a first processor 770 and a second processor 780 coupled via a point-to-point interconnect 750. While shown with only two processors 770, 780, it is to be understood that the scope of embodiments of the disclosure is not so limited. In other embodiments, one or more additional processors may be present in a given multiprocessor. In one embodiment, the multiprocessor system 700 may implement hybrid cores as described herein.

Processors 770 and 780 are shown including integrated memory controller units 772 and 782, respectively. Processor 770 also includes as part of its bus controller units point-to-point (P-P) interfaces 776 and 778; similarly, second processor 780 includes P-P interfaces 786 and 788. Processors 770, 780 may exchange information via a point-to-point (P-P) interface 750 using P-P interface circuits 778, 788. As shown in **Figure 7****,** IMCs 772 and 782 couple the processors to respective memories, namely a memory 732 and a memory 734, which may be portions of main memory locally attached to the respective processors.

Processors 770, 780 may each exchange information with a chipset 790 via individual P-P interfaces 752, 754 using point to point interface circuits 776, 794, 786, 798. Chipset 790 may also exchange information with a high-performance graphics circuit 738 via a high-performance graphics interface 739.

A shared cache (not shown) may be included in either processor or outside of both processors, yet connected with the processors via P-P interconnect, such that either or both processors' local cache information may be stored in the shared cache if a processor is placed into a low power mode.

Chipset 790 may be coupled to a first bus 716 via an interface 796. In one embodiment, first bus 716 may be a Peripheral Component Interconnect (PCI) bus, or a bus such as a PCI Express bus or another third generation I/O interconnect bus, although the scope of the present disclosure is not so limited.

As shown in **Figure 7****,** various I/O devices 714 may be coupled to first bus 716, along with a bus bridge 718 which couples first bus 716 to a second bus 720. In one embodiment, second bus 720 may be a low pin count (LPC) bus. Various devices may be coupled to second bus 720 including, for example, a keyboard and/or mouse 722, communication devices 727 and a storage unit 728 such as a disk drive or other mass storage device which may include instructions/code and data 730, in one embodiment. Further, an audio I/O 724 may be coupled to second bus 720. Note that other architectures are possible. For example, instead of the point-to-point architecture of **Figure 7****,** a system may implement a multi-drop bus or other such architecture.

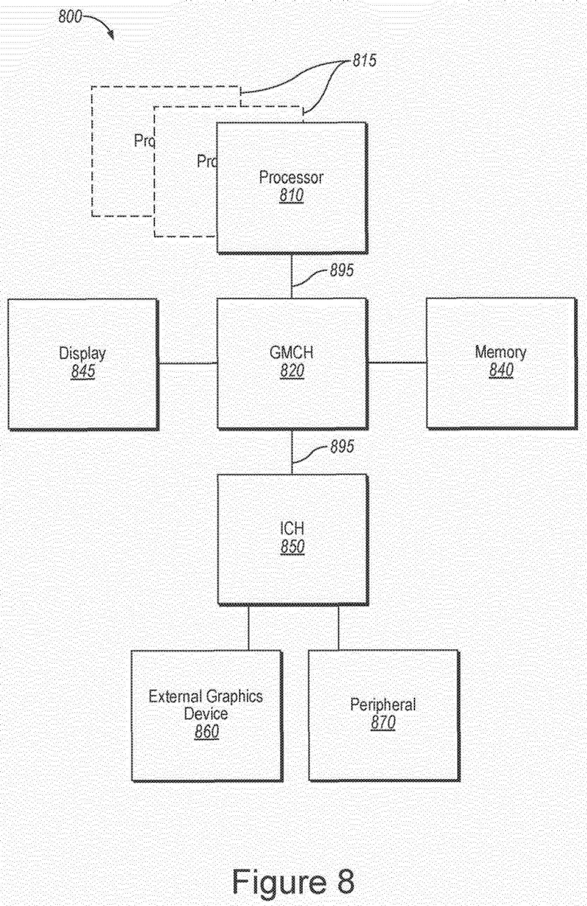

Referring now to **Figure 8****,** shown is a block diagram of a system 800 in which one embodiment of the disclosure may operate. The system 800 may include one or more processors 810, 815, which are coupled to graphics memory controller hub (GMCH) 820. The optional nature of additional processors 815 is denoted in **Figure 8** with broken lines. In one embodiment, processors 810, 815 implement hybrid cores according to embodiments of the disclosure.

Each processor 810, 815 may be some version of the circuit, integrated circuit, processor, and/or silicon integrated circuit as described above. However, it should be noted that it is unlikely that integrated graphics logic and integrated memory control units would exist in the processors 810, 815. **Figure 8** illustrates that the GMCH 820 may be coupled to a memory 840 that may be, for example, a dynamic random access memory (DRAM). The DRAM may, for at least one embodiment, be associated with a non-volatile cache.

The GMCH 820 may be a chipset, or a portion of a chipset. The GMCH 820 may communicate with the processor(s) 810, 815 and control interaction between the processor(s) 810, 815 and memory 840. The GMCH 820 may also act as an accelerated bus interface between the processor(s) 810, 815 and other elements of the system 800. For at least one embodiment, the GMCH 820 communicates with the processor(s) 810, 815 via a multi-drop bus, such as a frontside bus (FSB) 895.

Furthermore, GMCH 820 is coupled to a display 845 (such as a flat panel or touchscreen display). GMCH 820 may include an integrated graphics accelerator. GMCH 820 is further coupled to an input/output (I/O) controller hub (ICH) 850, which may be used to couple various peripheral devices to system 800. Shown for example in the embodiment of **Figure 8** is an external graphics device 860, which may be a discrete graphics device, coupled to ICH 850, along with another peripheral device 870.

Alternatively, additional or different processors may also be present in the system 800. For example, additional processor(s) 815 may include additional processors(s) that are the same as processor 810, additional processor(s) that are heterogeneous or asymmetric to processor 810, accelerators (such as, e.g., graphics accelerators or digital signal processing (DSP) units), field programmable gate arrays, or any other processor. There can be a variety of differences between the processor(s) 810, 815 in terms of a spectrum of metrics of merit including architectural, micro-architectural, thermal, power consumption characteristics, and the like. These differences may effectively manifest themselves as asymmetry and heterogeneity amongst the processors 810, 815. For at least one embodiment, the various processors 810, 815 may reside in the same die package.

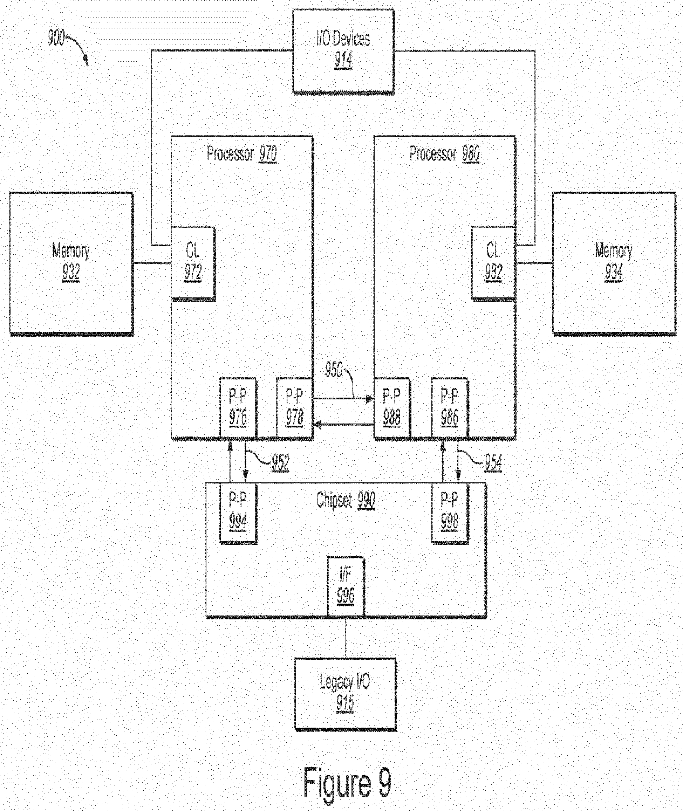

Referring now to **Figure 9****,** shown is a block diagram of a system 900 in which an embodiment of the disclosure may operate. **Figure 9** illustrates processors 970, 980. In one embodiment, processors 970, 980 may implement hybrid cores as described above. Processors 970, 980 may include integrated memory and I/O control logic ("CL") 972 and 982, respectively and intercommunicate with each other via point-to-point interconnect 950 between point-to-point (P-P) interfaces 978 and 988 respectively. Processors 970, 980 each communicate with chipset 990 via point-to-point interconnects 952 and 954 through the respective P-P interfaces 976 to 994 and 986 to 998 as shown. For at least one embodiment, the CL 972, 982 may include integrated memory controller units. CLs 972, 982 may include I/O control logic. As depicted, memories 932, 934 coupled to CLs 972, 982 and I/O devices 914 are also coupled to the control logic 972, 982. Legacy I/O devices 915 are coupled to the chipset 990 via interface 996.

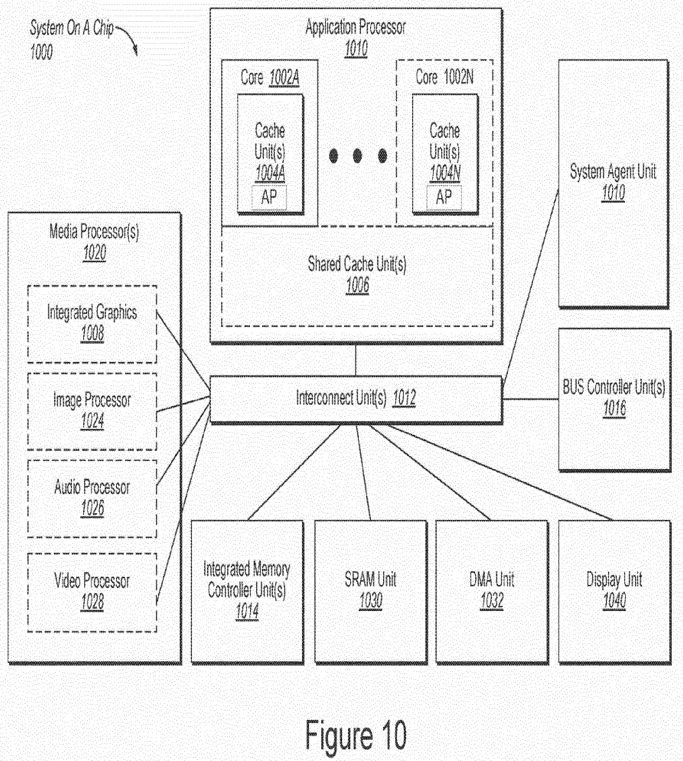

Embodiments may be implemented in many different system types. **Figure 10** is a block diagram of a SOC 1000 in accordance with an embodiment of the present disclosure. Dashed lined boxes are optional features on more advanced SOCs. In **Figure 10****,** an interconnect unit(s) 1012 is coupled to: an application processor 1020 which includes a set of one or more cores 1002A-N and shared cache unit(s) 1006; a system agent unit 1010; a bus controller unit(s) 1016; an integrated memory controller unit(s) 1014; a set or one or more media processors 1018 which may include integrated graphics logic 1008, an image processor 1024 for providing still and/or video camera functionality, an audio processor 1026 for providing hardware audio acceleration, and a video processor 1028 for providing video encode/decode acceleration; an static random access memory (SRAM) unit 1030; a direct memory access (DMA) unit 1032; and a display unit 1040 for coupling to one or more external displays. In one embodiment, a memory module may be included in the integrated memory controller unit(s) 1014. In another embodiment, the memory module may be included in one or more other components of the SOC 1000 that may be used to access and/or control a memory. The application processor 1020 may include a store address predictor for implementing hybrid cores as described in embodiments herein.

The memory hierarchy includes one or more levels of cache within the cores, a set or one or more shared cache units 1006, and external memory (not shown) coupled to the set of integrated memory controller units 1014. The set of shared cache units 1006 may include one or more mid-level caches, such as level 2 (L2), level 3 (L3), level 4 (L4), or other levels of cache, a last level cache (LLC), and/or combinations thereof.

In some embodiments, one or more of the cores 1002A-N are capable of multi-threading. The system agent 1010 includes those components coordinating and operating cores 1002A-N. The system agent unit 1010 may include for example a power control unit (PCU) and a display unit. The PCU may be or include logic and components needed for regulating the power state of the cores 1002A-N and the integrated graphics logic 1008. The display unit is for driving one or more externally connected displays.

The cores 1002A-N may be homogenous or heterogeneous in terms of architecture and/or instruction set. For example, some of the cores 1002A-N may be in order while others are out-of-order. As another example, two or more of the cores 1002A-N may be capable of execution the same instruction set, while others may be capable of executing only a subset of that instruction set or a different instruction set.

The application processor 1020 may be a general-purpose processor, such as a Core™ i3, i5, i7, 2 Duo and Quad, Xeon™, Itanium™, Atom™ or Quark™ processor, which are available from Intel™ Corporation, of Santa Clara, Calif. Alternatively, the application processor 1020 may be from another company, such as ARM Holdings™, Ltd, MIPS™, etc. The application processor 1020 may be a special-purpose processor, such as, for example, a network or communication processor, compression engine, graphics processor, co-processor, embedded processor, or the like. The application processor 1020 may be implemented on one or more chips. The application processor 1020 may be a part of and/or may be implemented on one or more substrates using any of a number of process technologies, such as, for example, BiCMOS, CMOS, or NMOS.

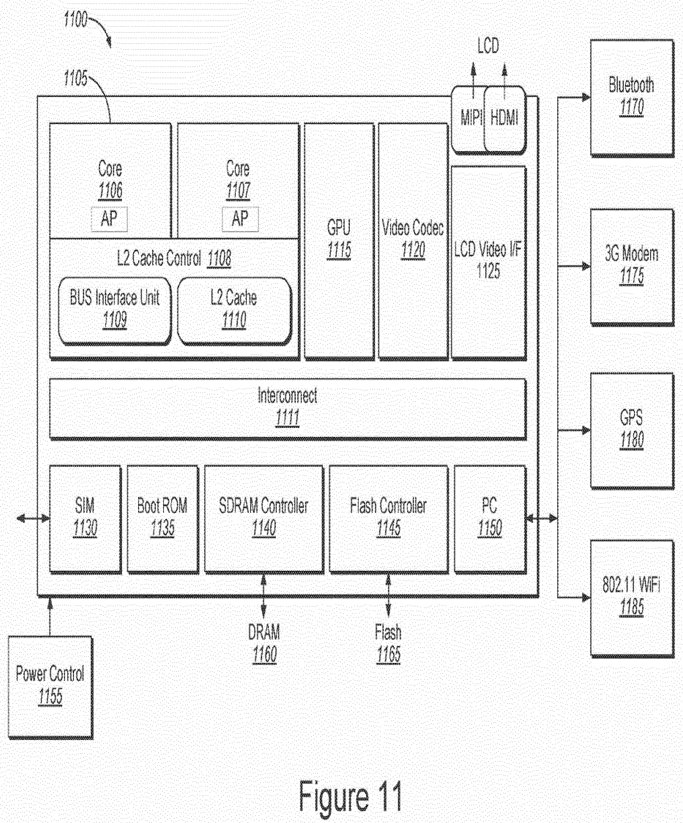

**Figure 11** is a block diagram of an embodiment of a system on-chip (SOC) design in accordance with the present disclosure. As a specific illustrative example, SOC 1100 is included in user equipment (UE). In one embodiment, UE refers to any device to be used by an end-user to communicate, such as a hand-held phone, smartphone, tablet, ultra-thin notebook, notebook with broadband adapter, or any other similar communication device. Often a UE connects to a base station or node, which potentially corresponds in nature to a mobile station (MS) in a GSM network.

Here, SOC 1100 includes 2 cores-1106 and 1107. Cores 1106 and 1107 may conform to an Instruction Set Architecture, such as an Intel® Architecture Core™-based processor, an Advanced Micro Devices, Inc. (AMD) processor, a MIPS-based processor, an ARM-based processor design, or a customer thereof, as well as their licensees or adopters. Cores 1106 and 1107 are coupled to cache control 1108 that is associated with bus interface unit 1109 and L2 cache 1110 to communicate with other parts of system 1100. Interconnect 1110 includes an on-chip interconnect, such as an IOSF, AMBA, or other interconnect discussed above, which potentially implements one or more aspects of the described disclosure. In one embodiment, cores 1106, 1107 may implement hybrid cores as described in embodiments herein.

Interconnect 1110 provides communication channels to the other components, such as a Subscriber Identity Module (SIM) 1130 to interface with a SIM card, a boot ROM 1135 to hold boot code for execution by cores 1106 and 1107 to initialize and boot SOC 1100, a SDRAM controller 1140 to interface with external memory (e.g. DRAM 1160), a flash controller 1145 to interface with non-volatile memory (e.g. Flash 1165), a peripheral control 1150 (e.g. Serial Peripheral Interface) to interface with peripherals, video codecs 1120 and Video interface 1125 to display and receive input (e.g. touch enabled input), GPU 1115 to perform graphics related computations, etc. Any of these interfaces may incorporate aspects of the disclosure described herein. In addition, the system 1100 illustrates peripherals for communication, such as a Bluetooth module 1170, 3G modem 1175, GPS 1180, and Wi-Fi 1185.

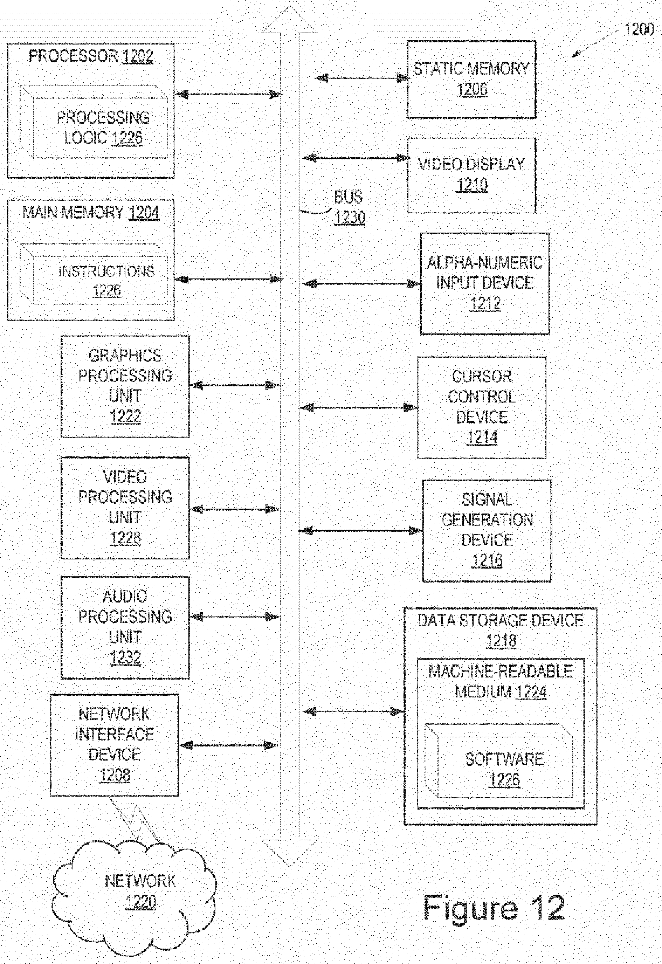

**Figure 12** illustrates a diagrammatic representation of a machine in the example form of a computer system 1200 within which a set of instructions, for causing the machine to perform any one or more of the methodologies discussed herein, may be executed. In alternative embodiments, the machine may be connected (e.g., networked) to other machines in a LAN, an intranet, an extranet, or the Internet. The machine may operate in the capacity of a server or a client device in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The computer system 1200 includes a processing device 1202, a main memory 1204 (e.g., read-only memory (ROM), flash memory, dynamic random access memory (DRAM) (such as synchronous DRAM (SDRAM) or DRAM (RDRAM), etc.), a static memory 1206 (e.g., flash memory, static random access memory (SRAM), etc.), and a data storage device 1218, which communicate with each other via a bus 1230.

Processing device 1202 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 1202 may also be one or more special-purpose processing devices such as an application specific integrated circuit (ASIC), a field programmable gate array (FPGA), a digital signal processor (DSP), network processor, or the like. In one embodiment, processing device 1202 may include one or processing cores. The processing device 1202 is configured to execute the processing logic 1226 for performing the operations and steps discussed herein. In one embodiment, processing device 1202 is the same as processor architecture 100 described with respect to **Figure 1** as described herein with embodiments of the disclosure.

The computer system 1200 may further include a network interface device 1208 communicably coupled to a network 1220. The computer system 1200 also may include a video display unit 1210 (e.g., a liquid crystal display (LCD) or a cathode ray tube (CRT)), an alphanumeric input device 1212 (e.g., a keyboard), a cursor control device 1214 (e.g., a mouse), and a signal generation device 1216 (e.g., a speaker). Furthermore, computer system 1200 may include a graphics processing unit 1222, a video processing unit 1228, and an audio processing unit 1232.

The data storage device 1218 may include a machine-accessible storage medium 1224 on which is stored software 1226 implementing any one or more of the methodologies of functions described herein, such as implementing store address prediction for memory disambiguation as described above. The software 1226 may also reside, completely or at least partially, within the main memory 1204 as instructions 1226 and/or within the processing device 1202 as processing logic 1226 during execution thereof by the computer system 1200; the main memory 1204 and the processing device 1202 also constituting machine-accessible storage media.

The machine-readable storage medium 1224 may also be used to store instructions 1226 implementing store address prediction for hybrid cores such as described according to embodiments of the disclosure. While the machine-accessible storage medium 1128 is shown in an example embodiment to be a single medium, the term "machine-accessible storage medium" should be taken to include a single medium or multiple media (e.g., a centralized or distributed database, and/or associated caches and servers) that store the one or more sets of instructions. The term "machine-accessible storage medium" shall also be taken to include any medium that is capable of storing, encoding or carrying a set of instruction for execution by the machine and that cause the machine to perform any one or more of the methodologies of the present disclosure. The term "machine-accessible storage medium" shall accordingly be taken to include, but not be limited to, solid-state memories, and optical and magnetic media.

The following examples pertain to further embodiments.

Example 1 is an apparatus comprising a memory and a cache eviction circuit operatively coupled to the memory, to receive a request to evict at least one cache line of a plurality of cache lines stored at a cache memory. The cache eviction circuit may further determine whether a condition associated with a replacement policy has been satisfied and in response to determining that the condition associated with the replacement policy has been satisfied, evict a second cache line of the plurality of cache lines based on a random replacement policy.

In Example 2, in the apparatus of Example 1, the cache eviction circuit is further to identify a period of time that the replacement policy has been used to evict one or more of the plurality of cache lines stored at the cache memory, wherein the condition associated with the replacement policy has been satisfied when the period of time exceeds a threshold period of time.

In Example 3, in the apparatus of any of Examples 1-2, the cache eviction circuit is further to identify a number of times that a particular cache line of the plurality of cache lines has been evicted by the replacement policy, wherein the condition associated with the replacement policy has been satisfied when the number of times satisfies a threshold number of times that the particular cache line has been evicted by using the replacement policy.

In Example 4, in the apparatus of any of Examples 1-3, the replacement policy is based on a least recently used cache line of the plurality of cache lines, and the random replacement policy is based on a random selection of a particular cache line of the plurality of cache lines to evict.

In Example 5, in the apparatus of any of Examples 1-4, the cache eviction circuit is further to identify a particular cache line of the plurality of cache lines and identify a status of the particular cache line. The cache eviction circuit may further determine whether the status of the particular cache line is associated with a protected status and in response to determining that the status of the particular cache line is associated with the protected status, determine to not evict the particular cache line and selecting a second cache line to evict in response to a second request.

In Example 6, in the apparatus of any of Examples 1-5, the cache eviction circuit is further to identify a status of a second cache line and determine whether the status of the second cache line is associated with a protected status, wherein the evicting of the second cache line is based on determining that the status of the cache line is not associated with the protected status.

In Example 7, in the apparatus of any of Examples 1-6, the protected status indicates whether the second cache line is available to be evicted by the random replacement policy or is not available to be evicted by the random replacement policy.

In Example 8, in the apparatus of any of Examples 1-7, in response to determining that the condition associated with the replacement policy has not been satisfied, the cache eviction circuit is further to evict the second cache line of the plurality of cache lines based on the replacement policy.

Example 9 is a system that comprises a processor core and a cache eviction circuit associated with the processor core to receive a first request to evict at least one cache line of a plurality of cache lines stored at a cache memory, evict a first cache line of the plurality of cache lines based on a replacement policy in response to the first request and receive a second request to evict at least one of the plurality of cache lines from the cache memory, the second request being received after the first request. The cache eviction circuit is further to determine whether a condition associated with the replacement policy has been satisfied and in response to determining that the condition associated with the replacement policy has been satisfied and in response to the second request, evict a second cache line of the plurality of cache lines based on a random replacement policy.

In Example 10, in the system of Example 9, the cache eviction circuit is further to identify a period of time that the replacement policy has been used to evict one or more of the plurality of cache lines stored at the cache memory, wherein the condition associated with the replacement policy has been satisfied when the period of time exceeds a threshold period of time.

In Example 11, in the system of any of Examples 9-10, the cache eviction circuit is further to identify a number of times that a particular cache line of the plurality of cache lines has been evicted by the replacement policy, wherein the condition associated with the replacement policy has been satisfied when the number of times satisfies a threshold number of times that the particular cache line has been evicted by using the replacement policy.

In Example 12, in the system of any of Examples 9-11, the replacement policy is based on a least recently used cache line of the plurality of cache lines, and the random replacement policy is based on a random selection of a particular cache line of the plurality of cache lines to evict.

In Example 13, in the system of any of Examples 9-12, the cache eviction circuit is further to identify a particular cache line of the plurality of cache lines and identify a status of the particular cache line. The cache eviction circuit is further to determine whether the status of the particular cache line is associated with a protected status and in response to determining that the status of the particular cache line is associated with the protected status, determine to not evict the particular cache line and selecting the second cache line to evict in response to the second request.

In Example 14, in the system of any of Examples 9-13, the cache eviction circuit is further to identify a status of the second cache line and determine whether the status of the second cache line is associated with a protected status, wherein the evicting of the second cache line is based on determining that the status of the cache line is not associated with the protected status.

In Example 15, in the system of any of Examples 9-14, the protected status indicates whether the second cache line is available to be evicted by the random replacement policy or is not available to be evicted by the random replacement policy.

In Example 16, in the system of any of Examples 9-15, in response to determining that the condition associated with the replacement policy has not been satisfied and in response to the second request, the cache eviction circuit is further to evict the second cache line of the plurality of cache lines based on the replacement policy.

Example 17 is a method comprising receiving a first request to evict at least one cache line of a plurality of cache lines stored at a cache memory, evicting a first cache line of the plurality of cache lines based on a replacement policy in response to the first request, receiving a second request to evict at least one of the plurality of cache lines from the cache memory, the second request being received after the first request, determining whether a condition associated with the replacement policy has been satisfied and in response to determining that the condition associated with the replacement policy has been satisfied and in response to the second request, evicting a second cache line of the plurality of cache lines based on a random replacement policy.

In Example 18, in the method of Example 17, the method further comprises identifying a period of time that the replacement policy has been used to evict one or more of the plurality of cache lines stored at the cache memory, wherein the condition associated with the replacement policy has been satisfied when the period of time exceeds a threshold period of time.

In Example 19, in the method of any of Examples 17-18, the method further comprises identifying a number of times that a particular cache line of the plurality of cache lines has been evicted by the replacement policy, wherein the condition associated with the replacement policy has been satisfied when the number of times satisfies a threshold number of times that the particular cache line has been evicted by using the replacement policy.

In Example 20, in the method of any of Examples 17-19, the replacement policy is based on a least recently used cache line of the plurality of cache lines, and the random replacement policy is based on a random selection of a particular cache line of the plurality of cache lines to evict.

In Example 21, in the method of any of Examples 17-20, the method further comprises identifying a particular cache line of the plurality of cache lines, identifying a status of the particular cache line, determining whether the status of the particular cache line is associated with a protected status and in response to determining that the status of the particular cache line is associated with the protected status, determining to not evict the particular cache line and selecting the second cache line to evict in response to the second request.

In Example 22, in the method of any of Examples 17-21, the method further comprises identifying a status of the second cache line and determining whether the status of the second cache line is associated with a protected status, wherein the evicting of the second cache line is based on determining that the status of the cache line is not associated with the protected status.

In Example 23, in the method of any of Examples 17-22, the protected status indicates whether the second cache line is available to be evicted by the random replacement policy or is not available to be evicted by the random replacement policy.

In Example 24, in the method of any of Examples 17-23, the method further comprises evicting the second cache line of the plurality of cache lines based on the replacement policy.

Example 25 is a system on a chip (SOC) comprising a plurality of functional units and a controller, coupled to the functional units, to receive a request to evict at least one cache line of a plurality of cache lines stored at a cache memory, determine whether a condition associated with a replacement policy has been satisfied and in response to determining that the condition associated with the replacement policy has been satisfied, evict a second cache line of the plurality of cache lines based on a random replacement policy.

In Example 26, the SOC of Example 25 further comprises the subject matter of any of Examples 2-8.

In Example 27, the SOC of any of Examples 25-26 further comprises the subject matter of any of Examples 17-24.

Example 28 is an apparatus comprising means for receiving a first request to evict at least one cache line of a plurality of cache lines stored at a cache memory, means for evicting a first cache line of the plurality of cache lines based on a replacement policy in response to the first request, means for receiving a second request to evict at least one of the plurality of cache lines from the cache memory, the second request being received after the first request, means for determining whether a condition associated with the replacement policy has been satisfied and means for, in response to determining that the condition associated with the replacement policy has been satisfied and in response to the second request, evicting a second cache line of the plurality of cache lines based on a random replacement policy.

In Example 29, the apparatus of Example 28 further comprises the subject matter of any of Examples 1-8 and 17-24.

Example 30 is an apparatus comprising a memory and a processor coupled to the memory and comprising a controller where the controller is configured to perform the method of any of Examples 17-24.

In Example 31, the apparatus of Example 30 further comprises the subject matter of any of Examples 1-16.

Example 32 is a non-transitory machine-readable storage medium including instructions that, when accessed by a processing device, cause the processing device to perform operations comprising identifying a particular cache line of the plurality of cache lines, identifying a status of the particular cache line, determining whether the status of the particular cache line is associated with a protected status and in response to determining that the status of the particular cache line is associated with the protected status, determining to not evict the particular cache line and selecting the second cache line to evict in response to the second request.

In Example 33, in the non-transitory machine-readable storage medium of Example 32, the operations further comprise the subject matter of any of Examples 17-25.

While the disclosure has been described with respect to a limited number of embodiments, those skilled in the art will appreciate numerous modifications and variations there from. It is intended that the appended claims cover all such modifications and variations as fall within the true spirit and scope of this disclosure.

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase 'configured to,' in one embodiment, refers to arranging, putting together, manufacturing, offering to sell, importing and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is one coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'to,' 'capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 910 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from the broader spirit and scope of the disclosure as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

## Claims

1. An apparatus comprising:
a memory; and
a cache eviction component, operatively coupled with the memory, to:
receive a request to evict at least one cache line of a plurality of cache lines stored at a cache memory;
determine whether a condition associated with a replacement policy has been satisfied; and
in response to determining that the condition associated with the replacement policy has been satisfied, evict a second cache line of the plurality of cache lines based on a random replacement policy.

2. The apparatus of claim 1, wherein the cache eviction component is further to:
identify a period of time that the replacement policy has been used to evict one or more of the plurality of cache lines stored at the cache memory, wherein the condition associated with the replacement policy has been satisfied when the period of time exceeds a threshold period of time.

3. The apparatus of claim 1, wherein the cache eviction component is further to:
identify a number of times that a particular cache line of the plurality of cache lines has been evicted by the replacement policy, wherein the condition associated with the replacement policy has been satisfied when the number of times satisfies a threshold number of times that the particular cache line has been evicted by using the replacement policy.

4. The apparatus of claim 1, wherein the replacement policy is based on a least recently used cache line of the plurality of cache lines, and the random replacement policy is based on a random selection of a particular cache line of the plurality of cache lines to evict.

5. The apparatus of claim 1, wherein the cache eviction component is further to:
identify a particular cache line of the plurality of cache lines;
identify a status of the particular cache line;
determine whether the status of the particular cache line is associated with a protected status; and
in response to determining that the status of the particular cache line is associated with the protected status, determine to not evict the particular cache line and selecting a second cache line to evict in response to a second request.

6. The apparatus of claim 1, wherein the cache eviction component is further to:
identify a status of a second cache line; and
determine whether the status of the second cache line is associated with a protected status, wherein the evicting of the second cache line is based on determining that the status of the cache line is not associated with the protected status.

7. The apparatus of claim 6, wherein the protected status indicates whether the second cache line is available to be evicted by the random replacement policy or is not available to be evicted by the random replacement policy.

8. The apparatus of claim 1, in response to determining that the condition associated with the replacement policy has not been satisfied, the cache eviction component is further to:
evict the second cache line of the plurality of cache lines based on the replacement policy.

9. An apparatus comprising means to perform a method as described in any preceding claim.

10. A machine readable storage medium comprising a plurality of instructions, when executed, to implement a method or realize an apparatus as claimed in any preceding claim.
